(19)

Europäisches Patentamt
European Patent Office
Office européen des brevets

(11) **EP 1 871 116 A2**

(12) **EUROPEAN PATENT APPLICATION**

(43) Date of publication:
**26.12.2007 Bulletin 2007/52**

(51) Int Cl.:
*H04N 7/26* (2006.01)          *H04N 7/50* (2006.01)

(21) Application number: **07110704.9**

(22) Date of filing: **20.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **22.06.2006 US 815603 P**
**16.08.2006 KR 20060077304**

(71) Applicant: **Samsung Electronics Co., Ltd.**
**Suwon-si**
**Gyeonggi-do 443-742 (KR)**

(72) Inventors:
• **Han, Woo-jin**
**Gyeonggi-do (KR)**
• **Lee, Bae-keun**
**Gyeonggi-do (KR)**
• **Lee, Tammy**
**Seoul (KR)**
• **Lee, Kyo-hyuk**
**Gyeonggi-do (KR)**

(74) Representative: **Robinson, Ian Michael**
**Appleyard Lees**
**15 Clare Road**
**Halifax, West Yorkshire HX1 2HY (GB)**

(54) **Compression of video encoding parameters**

(57)   The present invention relates to a video compression technology, and more particularly, to an effective flag-coding method and apparatus thereof by using a spatial correlation among various flags used to code a video frame. In order to accomplish the object, there is provided an apparatus for encoding a flag used to code a video frame composed of a plurality of blocks, the apparatus including a flag-assembling unit (121) which collects flag values allotted for each block and produces a flag bit string, based on spatial correlation of the blocks, a maximum-run-determining unit (122) which determines a maximum run of the flag bit string, and a converting unit (125) which converts the bits included in the flag bit string into a codeword having a size no more than the maximum run by using a predetermined codeword table (221).

**FIG. 9**

EP 1 871 116 A2

**Description**

The present invention relates to a video compression technology, and more particularly, to an effective flag-coding method and apparatus that uses the spatial correlation among various flags to code a video frame.

Development of communication technologies such as the Internet has led to an increase in video communication in addition to text and voice communication. However, consumers have not been satisfied with existing text-based communication schemes. To satisfy various consumer demands, multimedia data services containing text, images, music and the like have been increasingly provided. Multimedia data is usually voluminous and requires a large capacity storage medium. Also, a wide bandwidth is required for transmitting the multimedia data. Accordingly, a compression coding scheme is required when transmitting multimedia data.

A basic principle of data compression is to eliminate redundancy in the data. Data can be compressed by removing spatial redundancy, which is the duplication of identical colors or objects in an image, temporal redundancy, which is little or no variation between adjacent frames in a moving picture or successive repetition of the same sounds in audio, or perceptual-visual redundancy, which considers the limitations of human vision and human inability to hear high frequencies. In general video coding, temporal redundancy is removed by temporal filtering based on motion compensation, and spatial redundancy is removed by a spatial transformation.

Redundancy-free data is again subjected to quantization for lossy coding using a predetermined quantization step. The quantized data is finally subjected to entropy coding (lossless coding).

Standardization work for implementation of multilayer-based coding techniques using the H.264 standard is actively in progress by the joint video team (JVT) of the ISO/IEC (International Organization for Standardization/International Electrotechnical Commission) and the ITU (International Telecommunication Union).

Entropy coding techniques currently being used in the H.264 standard include CAVLC (Context Adaptive Variable Length Coding), CABAC (Context Adaptive Binary Arithmetic Coding), and Exp_Golomb (exponential Golomb).

Table 1 shows entropy coding techniques used on parameters in the H.264 standard.

Table 1: Coding Techniques for Parameters in H.264

| Coded parameter | entropy_coding_mode=0 | entropy_coding_mode=1 |
|---|---|---|
| Macroblock_type | Exp_Golomb | CABAC |
| Macroblock_pattern | | |
| Quantization parameter | | |
| Reference frame index | | |
| Motion vector | | |
| Residual data | CAVLC | |

According to Table 1, if the entropy_coding_mode flag is 0, Exp_Golomb is used in coding the macroblock type indicating whether a corresponding macroblock in an inter-prediction mode or intra-prediction mode, the macroblock pattern specifying the type of sub-block that forms a macroblock, the quantization parameter which is an index to determine a quantization step, the reference flame index specifying the frame number which is referred to in an inter-prediction mode, and the motion vector, while CAVAC is used in encoding the residual data defining a difference between an original image and a predicted image.

If the entropy_coding_mode flag is 1, all the parameters are coded by CABAC.

Since CABAC exhibits high performance with respect to a parameter having high complexity, entropy coding based on VLC (Variable Length Coding), e.g., CAVLC, is set as a basic profile.

Standardization work for implementation of multilayer-based coding techniques using the H.264 standard is in actively progress at present by the joint video team (JVT) of the ISO/IEC (International Organization for Standardization/ International Electrotechnical Commission) and the ITU (International Telecommunication Union).

According to the present invention there is provided an apparatus and method as set forth in the appended claims. Preferred features of the invention will be apparent from the dependent claims, and the description which follows.

The present invention has been conceived to address the aforementioned requirements, and to provide a method and apparatus for effectively coding various flags used in a video codec in consideration of spatial correlation.

This and other objects, features and advantages, of the present invention will become clear to those skilled in the art upon review of the following description, attached drawings and appended claims.

According to an aspect of the present invention, there is provided an apparatus for encoding a flag used to code a video frame composed of a plurality of blocks, the apparatus including a flag-assembling unit which collects flag values allotted for each block and produces a flag bit string based on spatial correlation of the blocks, a maximum-run-determining unit which determines a maximum run of the flag bit string, and a converting unit which converts the bits included in the flag bit string, at a size no more than the maximum run, into a codeword by using a predetermined codeword table.

According to another aspect of the present invention, there is provided an apparatus for decoding a flag used to code a video frame composed of a plurality of blocks, the apparatus including a inverse-converting unit which reconstructs a flag bit string from a codeword included in the input bitstream with reference to a predetermined codeword table, and a flag-restoring unit which reads out individual bits included in the reconstructed flag bit string and restores the flags with respect to the plurality of blocks.

According to still another aspect of the present invention, there is provided an apparatus for encoding a flag used to code a video frame composed of a plurality of blocks, the apparatus including a flag-assembling unit which collects flag values allotted for each block and produces a flag bit string, based on spatial correlation of the blocks, a bit-array-dividing unit which divides the flag bit string into a predetermined size of a group, a skip-bit-setting unit which sets a skip bit indicating whether every value of the divided flag bit strings is 0, and a switching unit which records or skips the divided flag bit string into a bitstream according to the set skip bit.

According to yet another aspect of the present invention, there is provided an apparatus for decoding a flag used to code a video frame composed of a plurality of blocks, the apparatus including a skip-bit-reading unit which reads a skip bit from the input bitstream, a group-size-reading unit which reads out a group size from the input bitstream, and a flag-restoring unit which restores the individual flags with respect to the blocks from the bits as large as the group size among flag bit strings included in the bitstream according to the read skip bit.

The above and other features and advantages of the present invention will become more apparent by describing in detail preferred embodiments thereof with reference to the attached drawings, in which:

FIG. 1 is a graph illustrating change of a bit ratio between VLC and CABAC according to quantization parameter;

FIG. 2 is a graph illustrating a bit ratio of a variety of flags with respect to VLC and CABAC respectively;

FIG. 3 illustrates macroblocks included in a frame;

FIG. 4 illustrates spatial correlation between specific flags contained in the individual macroblock headers;

FIG. 5 is a conceptual diagram illustrating entropy coding by collecting the values of identical flags;

FIG. 6 illustrates a graph illustrating a relative ratio distribution of run values;

FIG. 7 illustrates configuration of a bitstream according to a second embodiment;

FIG. 8 illustrates comparing the capacity of the first embodiment, the second embodiment, and the conventional joint scalable video model (JSVM) of the present invention;

FIG. 9 is a block diagram illustrating configuration of a video-encoding apparatus according to a first embodiment of the present invention;

FIG. 10 is a block diagram illustrating configuration of a video-decoding apparatus according to a first embodiment of the present invention;

FIG. 11 is a block diagram illustrating configuration of a video-encoding apparatus according to a second embodiment of the present invention; and

FIG. 12 is a block diagram illustrating configuration of a video-decoding apparatus according to a second embodiment of the present invention.

The present invention will now be described more fully with reference to the accompanying drawings, in which preferred embodiments of the invention are shown.

The starting point of the present invention is an inefficiency of a variable length coding (VLC) scheme independently performed for each macroblock. The problem is especially serious for the flags with a very strong relation in a successive macroblocks. However, VLC scheme used in the current SVC allows the flags of individual macroblocks to be independently coded. As a result, when the flags in the neighboring macroblock have similar values, the difference of operation of VLC and CABAC is large. Since the performance of CABAC is generally known to be better than that of VLC, it would be more preferable to use CABAC. However, due to the computational complexity of CABAC, SVC uses VLC when coding a flag.

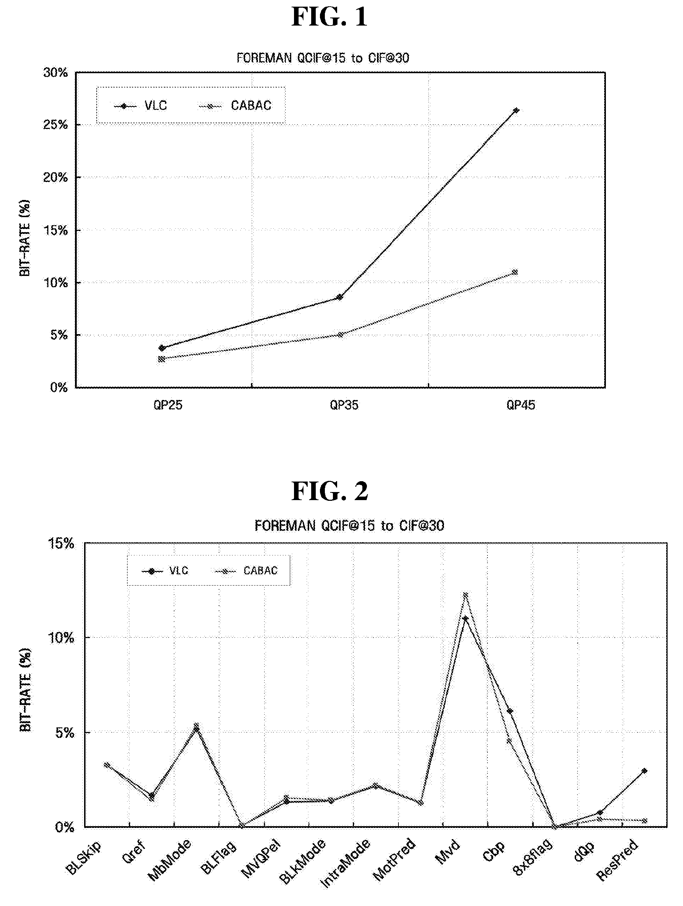

FIG. 1 is a graph illustrating change of a bit ratio between VLC and CABAC according to quantization parameter. The bit ratio indicates a ratio which a certain flag (Cbp in Fig. 1) accounts for in a whole bitstream. As the quantization parameter (QP) increases, the coded texture data decreases. Therefore, it is natural for the bit ratio to increase as the QP increases. However, the difference of the bit ratio between VLC and CABAC gets larger as the QP increases, which is why VLC independently performed on the macroblock does not cover the case where most Cbps's are 0. Therefore, the current VLC used in SVC needs to be improved.

FIG. 2 is a graph illustrating a bit ratio of a variety of flags respectively with respect to VLC and CABAC. In most other flags, the bit ratio between VLC and CABAC is not large. However, in the Cbp and the ResPred (residual prediction flag), the bit ratio of VLC is much larger than that of CABAC, which shows that the conventional VLC scheme is not sufficient for the Cbp and the ResPres flags. Therefore, a method of collecting the flags (especially, the Cbp and the ResPres flags) included in the spatially neighboring macroblock and then applying VLC to them is suggested.

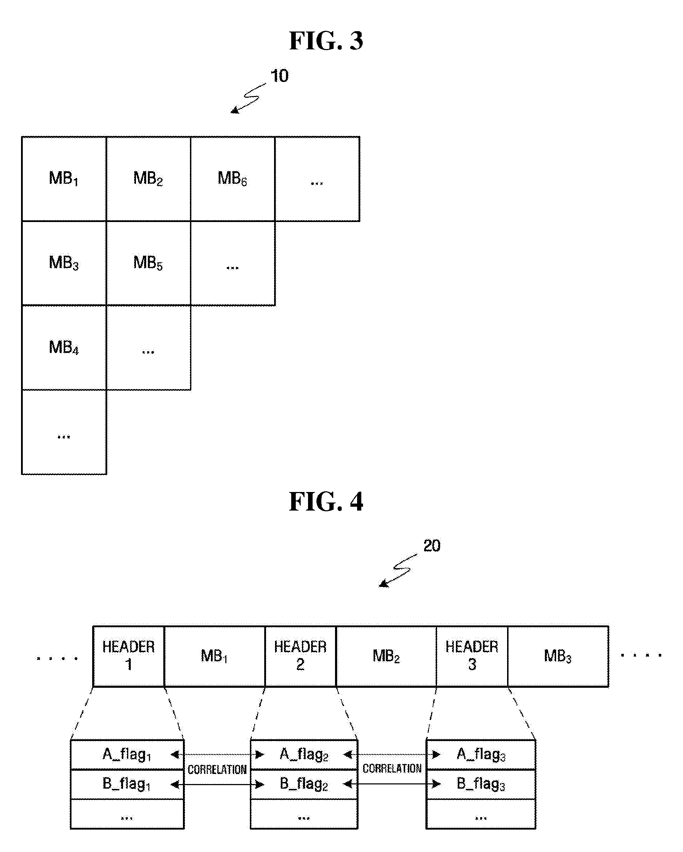

In a video coding process, the process generally proceeds in a macroblock unit of 16x16 pixels. As illustrated in FIG. 3, a single frame or slice is divided into a plurality of macroblocks ($MB_n$ : "n" is an integer). Each macroblock changes into a video stream through a predetermined lossy coding process and lossless coding process. The coded macroblocks ($MB_n$) can configure a single video stream 20, as illustrated in FIG. 4, after headers (macroblock headers) are added to the front of the each coded macroblock. The headers include a variety of flags ($A\_flag_n$, $B\_flag_n$). However, although each header has an identical type of flag, the value that the flag has may be different depending on each macroblock. However, since the spatial correlation and the similarity between the macroblocks spatially neighboring each other are great, the possibility is very high that the flag included in the neighboring macroblock may have the identical value.

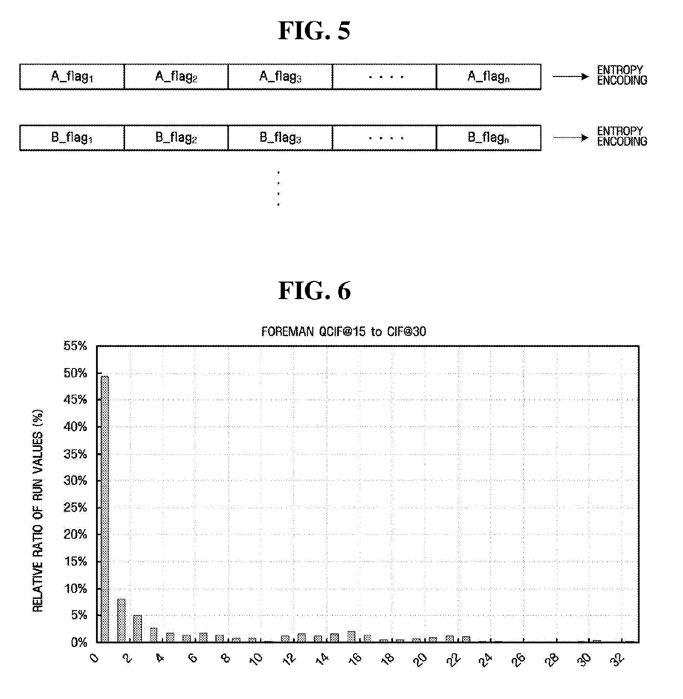

Owing to the fact mentioned above, in the present invention, the coding process proceeds after the values of the specific flag are collected and a bit string is created. For example, as illustrated in FIG. 5, the coding process is achieved after collecting the values (A_flag1, A_flag2,..., A_flagN) that the A_flag flags have, and the entropy encoding (VLC) process is achieved after collecting the values (B_flag1, B_flag2,..., B_flagN) that the flags called a B_flag have. As such, when the coding process is performed after collecting specific flag values, it can be easily predicted that the compression efficiency is improved due to the similarity of the values. As illustrated in FIG. 5, a group of the collected specific flags is defined as a "flag bit string".

According to the present invention, a method of coding the flag bit string generated by collecting flags can be divided into two embodiments. The first embodiment is to collect the flags and apply them to VLC scheme. The second embodiment is to introduce a separate flag indicating that all the flags collected in a predetermined unit are 0.

If the flags are collected with respect to a whole macroblock included in a slice or a frame, the maximum run can be identical to the number of the whole macroblock. In addition, as the run (the number of consecutive 0's continued until the number over 0 appears) improves as illustrated in FIG. 6, the existing ratio reduces exponentially in general. In this case, since it is hard to design a VLC table, the maximum run needs to be limited to a certain value (N). Then, the symbol runs having the run above N are mapped into N. As a result, it is anticipated that the ratio when the run is changed to N will increase, and therefore, the shorter codeword can be allotted to the symbol having the run of N. The symbol is a unit converted into a codeword, and a part of a flag bit string.

Through a variety of experiments, a good result was obtained when the maximum run in the present invention was 8. As such, table 2 illustrates a codeword table with a maximum run of 8.

Table 2: Codewords for Different Runs

| Symbol | | Codeword |
|---|---|---|
| 00000000 | run: 8 | 0 |
| 1 | run: 0 | 10 |
| 01 | run: 1 | 110 |
| 001 | run: 2 | 1110 |
| 0001 | run: 3 | 11110 |
| 00001 | run: 4 | 111110 |
| 000001 | run: 5 | 1111110 |
| 0000001 | run: 6 | 11111110 |
| 00000001 | run: 7 | 111111110 |

According to Table 2, shorter codewords are generally allotted to the symbol with a small run. However, the symbol with a maximum run of 8 has the shortest codeword, which considers the fact that the generation ratio of the maximum run increases because the symbols greater than or equal to the maximum run are all mapped to the maximum run. In addition, since the flag such as a Cbp or a residual prediction flag has higher frequency that 0 generates as it is closer to the upper layer or to the upper temporal level, the codeword table like Table 2 can be effectively used.

However, compared to the Cbp flag, the residual prediction flag has a more reasonable prediction value. As the prediction value, for example, the residual energy of the lower layer (basic layer), that is, the Cbp of the lower layer can be used. When the residual energy of the lower layer macroblock corresponding to the current macroblock is 0, the possibility is high that the residual prediction flag of the current macroblock is 0. When the residual energy is 1, the possibility of the residual prediction flag being 1 as well is high. That is based on the fact that, when the residual energy of the corresponding lower layer is 0, the possibility of using the residual prediction is almost zero because there is no advantage benefited from the residual prediction. When the residual prediction is not used, the residual prediction flag is displayed as 0.

Therefore, using the similarity to the prediction value applied to the layers as mentioned above, the codeword table can be exploited more effectively. More specifically, an exclusive logical sum operation like an equation 1 is performed in the flag bit string first, and then the codeword table like an equation 2 is applied to the result of the calculation.

$$X = \text{residual\_predition\_flag} \,\char94\, \text{base-layer residual energy} \qquad (1)$$

Here, X refers to the result of the calculation, residual_prediction_flag refers to the residual prediction flag, and base-layer residual energy refers to the Cbp of the corresponding lower layer. The result of the operation X can be encoded more effectively by the codeword table like table 2 because the possibility of it being 0 is very high due to the similarity between the residual_predition_flag and the base-layer residual energy.

In an entropy coding process, most of the effective compression depends on how shortly the consecutive 0's are expressed, for which the second embodiment of the present invention has been conceived to solve the problem using the method simpler than the first embodiment. In the second embodiment, a flag bit string is divided in a predetermined size (hereinafter, referred to as a "group size"), and a flag (hereinafter, referred to as a "skip bit") indicating that the divided bits (hereinafter, referred to as a "bit group") is newly defined. When the skip bit is 1, it is instructed that the bits included in the corresponding bit group are 0. When the flag is 0, it is instructed that the non-zero exists among the bits included in the corresponding bit group.

When the skip bit is 1, the bits included in the corresponding bit group are all skipped and not included in a bitstream. When the skip bit is 0, in the same manner as the conventional SVC, the individual flags are not specially coded, and are embedded in the bitstream as they are.

The following second embodiment is summarized by Table 3.

Table 3: Codeword and Skip Bits of the Second Embodiment

| Symbol (bit group) | | Skip bit | Codeword |
|---|---|---|---|
| 00000000 | run: 8 | 1 (skip) | none |
| abcdefgh | run: others | 0 (non-skip) | abcdefgh |

That is, when every bit of the bit group is 0 (or, the run has the same size as the bit group), the skip bit is 1 and the codeword does not exist. If non-zero bit exists in the bit group, the skip bit is 0 and the codeword is identical to the originally input value (abcdefgh). That is, if the skip bit is 1, the symbol is skipped. When the skip bit is 0, the symbol is not coded.

In the present invention, it could be checked that the generally satisfying result can be obtained when the group size is 8. Therefore, although it was exemplified when the group size is 8 in Table 3, the optimal value of the group size can be changed according to an input image, a coefficient of the layer, and the allowed bit ratio. The optimal value can be calculated by a video encoder side. That is, a group size indicating smaller quantity of the bit can be selected by comparing the result of being actually coded according to a variety of group sizes. However, when the group size extremely 1, the identical method is used to the method used in the conventional SVC. If a group size is not predetermined as the fixed value between an encoder and decoder, the group size calculated by the encoder side needs to be included in a bitstream. In this case, the group size is recorded in a header of the initial macroblock among the macroblocks (hereinafter, referred to as a "macroblock group") with the size as large as a slice header or the group size and transmitted to a decoder side.

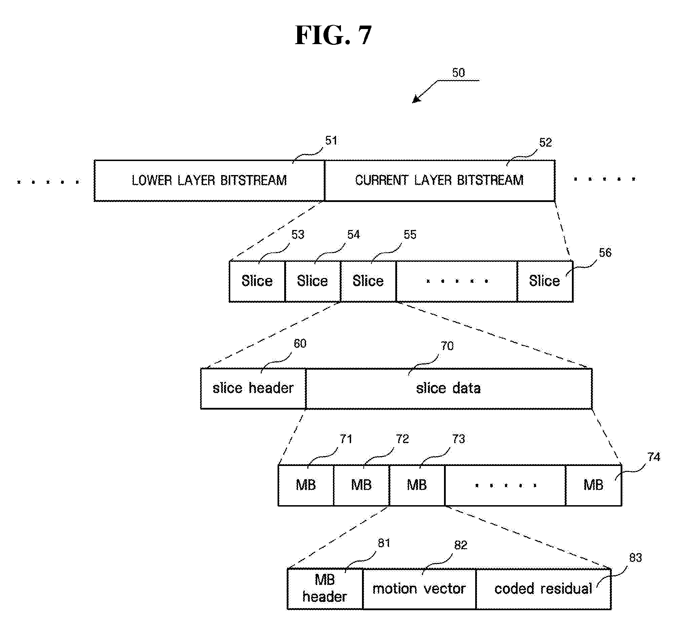

FIG. 7 illustrates a configuration of a bitstream 50 according to a second embodiment.

The bitstream 50 includes bitstreams 51 and 52 for each layer. The bitstreams 51 and 52 for each layer include a plurality of frames or slices 53, 54, 55, and 56. Generally, a bitstream is coded in a slice unit rather in a frame unit in H.264 or SVC. The slice may be identical to a single frame, or a single macroblock.

A single slice 55 includes a slice header 60 and a slice data 70, the slice data 70 including one or more macroblocks (MB) 71 to 74.

A single macroblock 73 includes a macroblock (MB) header 81, a motion vector field 82, and the coded residual field 83. The additional information on the corresponding macroblock is recorded in the macroblock header 81, and the motion vectors for each block are recorded in the motion vector field 82. In addition, the result of quantization with respect to the corresponding macroblock, that is, the coded texture data, is recorded in the coded residual field 85.

Syntax and semantics need to be somewhat revised in order to apply the second embodiment to the conventional SVC. Table 4 illustrates an algorithm recording a syntax included in the slice header 60. In Table 4 and following tables, the portion to be modified according to application of the second embodiment is in bold.

Table 4

| slice_header_in_scalable_extension( ) { | C | Descriptor |
|---|---|---|
| .... | | |
| if( slice_type != PR ) { | | |
| .... | | |
| if( nal_ref_idc != 0 ) | | |
| dec_ref_pic_marking( ) | 2 | |
| if( entropy_coding_mode_flag && slice_type != EI ) | | |
| cabac_init_idc | 2 | ue(v) |
| **if ( !entropy_coding_mode_flag) {** | | |
| **Cbp_groupsize_minus1** | 2 | u(3) |
| **if( base_id_plus1 != 0 && slice_type !=EI )** | | |
| **respredflag_groupsize_minus1** | 2 | u(3) |
| **}** | | |
| **}** | | |
| .... | | |

Referring to FIG. 4, if the entropy_coding_mode_flag is not 1, a parameter (Cbp_groupsize_minus1) indicating a group size in Cbp is included in a bitstream. The entropy_coding_mode_flag indicates a specific entropy-coding method (VLC or CABAC). If the value is 1, the flag is to be coded using CABAC, and if 0, the flag is to be coded using VLC.

Meanwhile, if a base layer corresponding to the current macroblock exists and a slice type is not an "intra" type (EI) but an "inter" type (EB or EP), a parameter (respredflag_groupsize_minus1) indicating the value obtained when subtracting 1 from a group size in the residual prediction flag is included in the bitstream.

Table 5 shows an algorithm for recording a syntax included in the macroblock header 81 when the second embodiment of the present invention is applied to the Cbp flag.

Table 5

| macroblock_layer_in_scalable_extension( ) { | C | Descriptor |
|---|---|---|
| .... | | |
| if( MbPartPredMode( mb_type, 0 ) != Intra_16x16 ) { | | |
| **if ( entropy_coding_mode_flag )** | | |
| **coded_block_pattern** | 2 | ae(v) |
| **else {** | | |

(continued)

| macroblock_layer_in_scalable_extension( ) { | C | Descriptor |
|---|---|---|
| **if ( Cbp_group_size_minus1 == 0 )** | | |
| **coded_block_pattern** | 2 | ue(v) |
| **else {** | | |
| **if ( FirstMbInCbpGroup ) {** | | |
| **Cbp_skip_flag** | 2 | u(1) |
| **LatestCbpSkipFlag = Cbp_skip_flag** | | |
| **}** | | |
| **if (LatestCbpSkipFlag == 0)** | | |
| **coded_block_pattern** | 2 | ue(v) |
| **}** | | |
| **}** | | |

In the algorithm, if the entropy_coding_mode_flag is not 1, Cbp_group_size_minus1 (a value obtained when subtracting 1 from the Cbp group size) is checked. If the checked value is 0, that is, when the Cbp group size is 1, the coded_block_pattern is independently recorded in the conventional manner. If the checked value is not 0, the Cbp_skip_flag (skip bit) is recorded. The Cbp_skip_flag is recorded in the first macroblock (FirstMbInCbpGroup) in a macroblock group. When the Cbp_skip_flag is 1, the coded_block_pattern is skipped in the headers of every macroblock included in the macroblock group. Then, when Cbp_skip_flag is 0, the coded_block_pattern is recorded in the individual headers of the macroblock.

Table 6 shows an algorithm for recording a syntax included in the macroblock header 81 when the second embodiment of the present invention is applied to the residual prediction flag. Table 6 can be understood in the same manner as Table 5. In Table 6, residual_prediction_flag indicates residual prediction flag, and respredflag_skip_flag indicates a skip bit with respect to the residual prediction flag.

Table 6

| residual_in_scalable_extension( ) { | C | Descriptor |
|---|---|---|
| if ( adaptive_prediction_flag && <br>   MbPartPredType( mb_type, 0 ) != Intra_16x16 && <br>   MbPartPredType( mb_type, 0 ) != Intra_8x8 && <br>   MbPartPredType( mb_type, 0 ) != Intra_4x4 && <br>   MbPartPredType( mb_type, 0 ) != Intra_Base ) { | | |
| **if ( entropy_coding_mode_flag )** | | |
| **residual_prediction_flag** | 3 \| 4 | **ae(v)** |
| **else {** | | |
| **if ( respred_group_size_minus1 == 0 )** | | |
| **residual_prediction_flag** | **2** | **u(1)** |
| **else {** | | |
| **if ( FirstMbInResPredFlagGroup ) {** | | |
| **respredflag_skip_flag** | **2** | **u(1)** |
| **LatestResPredSkipFlag = respred_skip_flag** | | |
| **}** | | |
| **if (LatestResPredSkipFlag == 0)** | | |
| **residual_prediction_flag** | **2** | **u(1)** |

(continued)

| residual_in_scalable_extension( ) { | C | Descriptor |
|---|---|---|
| } | | |
| } | | |
| } | | |

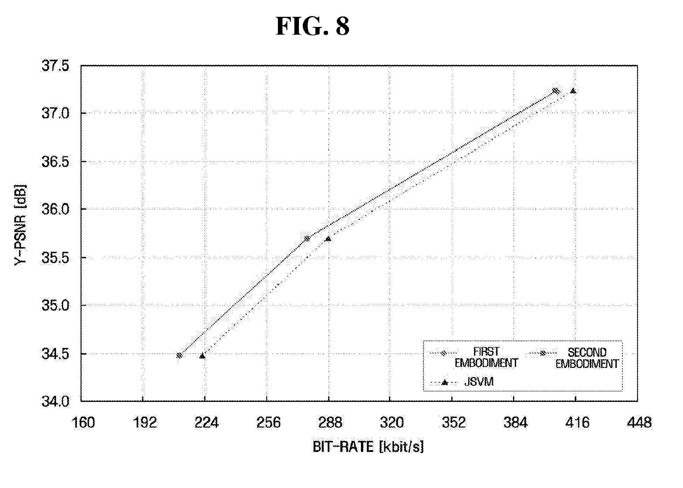

FIG. 8 illustrates a comparison of the capacity of the first embodiment, the second embodiment, and the conventional joint scalable video model (JSVM) of the present invention. Here, the video sequence used herein is a foreman CIF sequence. The bit ratio consumed to implement a peek signal-to-noise ratio (Y-PSNR) having identical brightness is similar to that of the first embodiment and the second embodiment, having big difference with the JSVM around 5 to 10%. As such, if the capacity of the first embodiment and that of the second embodiment are almost similar, the second embodiment with less complicated way of being calculated may be used more effectively.

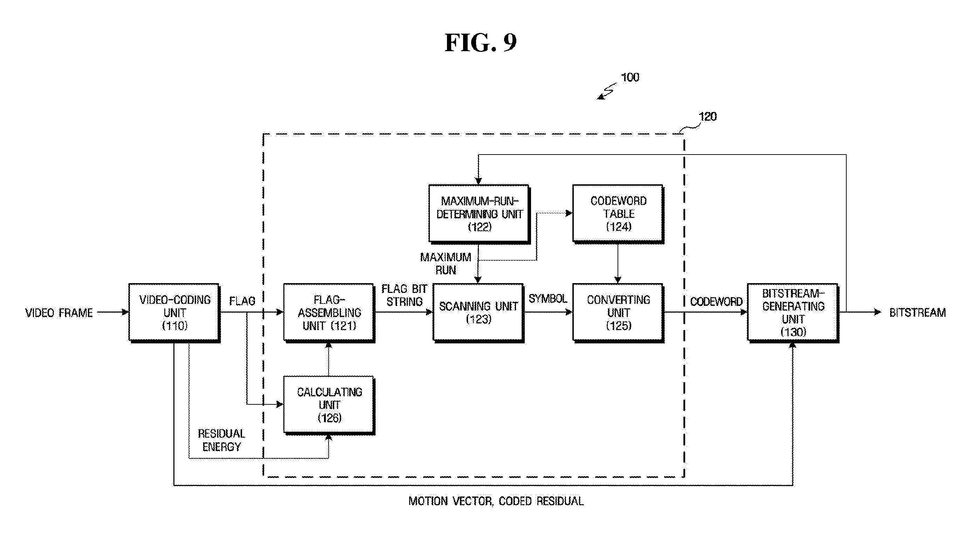

FIG. 9 is a block diagram illustrating a configuration of a video-encoding apparatus 100 and a flag-encoding apparatus 120 according to a first embodiment of the present invention.

The video-encoding apparatus 100 includes a video-coding unit 110, a flag-encoding apparatus 120, and a bitstream generating unit 130.

The video-coding unit 110 generates a motion vector and the coded residual from the input video frame. At this time, the video-coding unit 110 displays additional information on the motion vector and the coded residual through a variety of flags, and the flags are input to the flag-encoding apparatus 120. The flag can be set for each block (for example, each macroblock) included in the video frame.

The video-coding unit 110 performs a predicting process, DCT converting process, and a quantization process widely known in this field in order to obtain the motion vector and the coded residual. In the present SVC, an inter-prediction based on a motion prediction and motion compensation, a directional intra-prediction using neighboring pixel as a prediction signal in a single frame, an intra base prediction using an image of the corresponding lower layer as a prediction signal, and a residual prediction performed to the layers with respect to the inter-predicted signal.

The flag-encoding apparatus 120 can be subdivided into a flag-assembling unit 121, a maximum-run-determining unit 122, a scanning unit 123, a codeword table 124, a converting unit 125, and a calculating unit 126.

The flag-assembling unit 121 generates a flag bit string after by collecting a flag value allotted for each block based on spatial correlation of the blocks included in the video frame. The spatial correlation implies if the location of the blocks are adjacent each other in a single video frame. For example, when determining an order of the macroblocks in diagonal direction as illustrated in FIG. 3, $MB_1$ to $MB_6$ are spatially adjacent.

The maximum-run-determining unit 122 determines the maximum run of the flag bit string. According to the first embodiment of the present invention, waste of unnecessary bit is to be reduced by limiting the maximum run when the codeword is applied. The maximum run can be determined as the value with the minimum size of the final bitstream. Meanwhile, without determining the maximum run in the flag-encoding apparatus 120 one by one, the value already fixed between the video-encoding apparatus and the video-decoding apparatus (for example, 8) can be predetermined.

The scanning unit 123 provides the bits (hereinafter, referred to as the "masks") from the consecutive 0's to the first non-zero value as a single symbol to the converting unit 125 by scanning the flag bit string.

The converting unit 125, embedded in the flag bit string, converts the bits with a size below the maximum run into a codeword by using a codeword table 124 as illustrated in Table 2.

The codeword table 124 maps 0 as many as the number corresponding to the determined maximum run to the codeword having the shortest length, and the codeword with the shortest length is preferable to be 0.

The flag-encoding technology can be applied to other various flags provided by the SVC, however, more effectiveness can be anticipated especially when applied to the coded block pattern (Cbp) or the residual prediction flag.

Meanwhile, when the flag-encoding technology is applied to the residual prediction flag, as mentioned above, it is possible to obtain an exclusive logical sum of the residual prediction flag and the value indicating if the residual energy of the block of lower layer corresponding to the block including the flag value exists before the flag bit string is generated through the calculating unit 126. The presence of residual energy can be discovered through the coded block pattern (Cbp) of the lower-layer block. More 0's can be generated by additionally introducing the process of obtaining the exclusive logical sum, which results in an increase of the encoding efficiency.

Finally, the bitstream generating unit 130 generates a codeword provided by the converting unit 125, a motion vector provided by the video-coding unit 110, and a bitstream including the coded residual.

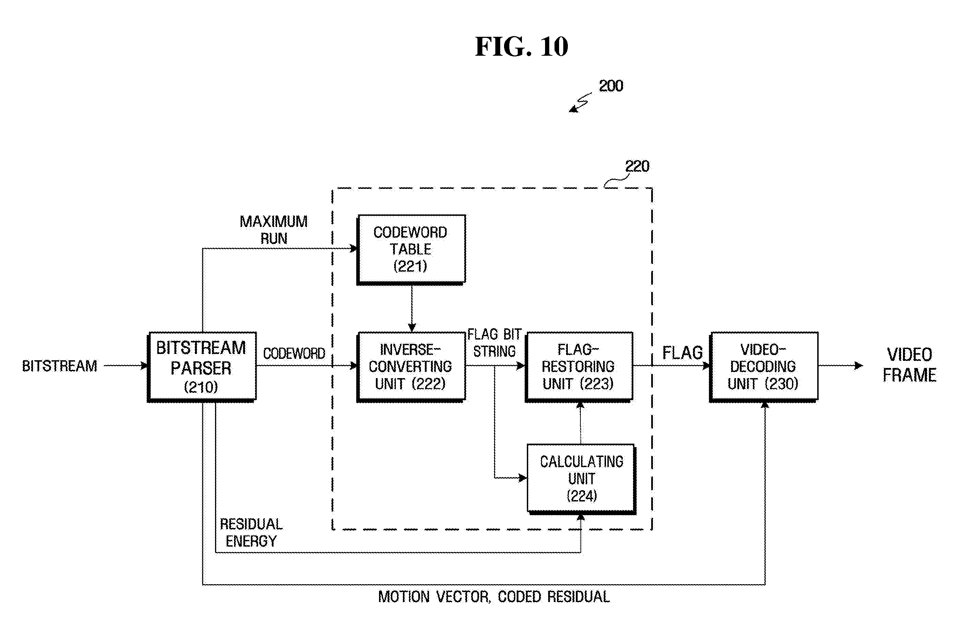

FIG. 10 is a block diagram illustrating configuration of a video-decoding apparatus 200 and a flag-decoding apparatus 220 according to a first embodiment of the present invention.

The video-decoding apparatus 200 includes a bitstream parser 210, a flag-decoding apparatus 220, and a video-decoding unit 230.

First, the bitstream parser 210 reads out the motion vector, the coded residual, the maximum run and the codeword from the input bitstream.

The flag-decoding apparatus 220 decodes the flag used to code a video frame composed of a plurality of blocks, including a codeword table 221, a inverse-converting unit 222, a flag-restoring unit 223, and a calculating unit 224.

The inverse-converting unit 222 constructs the flag bit string from the codeword included in the input bitstream with reference to a predetermined codeword table.

The codeword table 221 corresponds to the codeword table 124 of FIG. 9, mapping the codeword to the symbol within the maximum run with a predetermined size. Especially, the codeword table 221 maps the codeword having the shortest length among the codewords into a number of 0's corresponding to the maximum run. At this time, the codeword with the shortest length is 0. The maximum run can be read from a bitstream, however, the predetermined value (for example, 8) can be used.

The flag-restoring unit 223 restores the flags with respect to the plurality of blocks by reading out individual bits included in the reconstructed flag bit string. That is, the individual bits are changed into a flag of the individual bits. The blocks corresponding to the bits adjacent to each other among the read bits have the spatially adjacent position in the video frame.

When the to-be-restored flag is a residual prediction flag, the flag-decoding apparatus 220 may further include a calculating unit 224 which obtains the exclusive logical sum of the flag bit string reconstructed by the inverse-converting unit 222 and the value indicating if the residual energy of the lower-layer block corresponding to the block including the flag bit string. At this time, the result of obtaining the exclusive logical sum is changed into the residual prediction flag.

Finally, the video-decoding unit 230 reconstructs the video frame by using the restored flag, and a motion vector and the coded residual provided from the bitstream parser 210. The video frame reconstructing process can be achieved by a conventional method performed inversely to the video frame-coding process of FIG. 10.

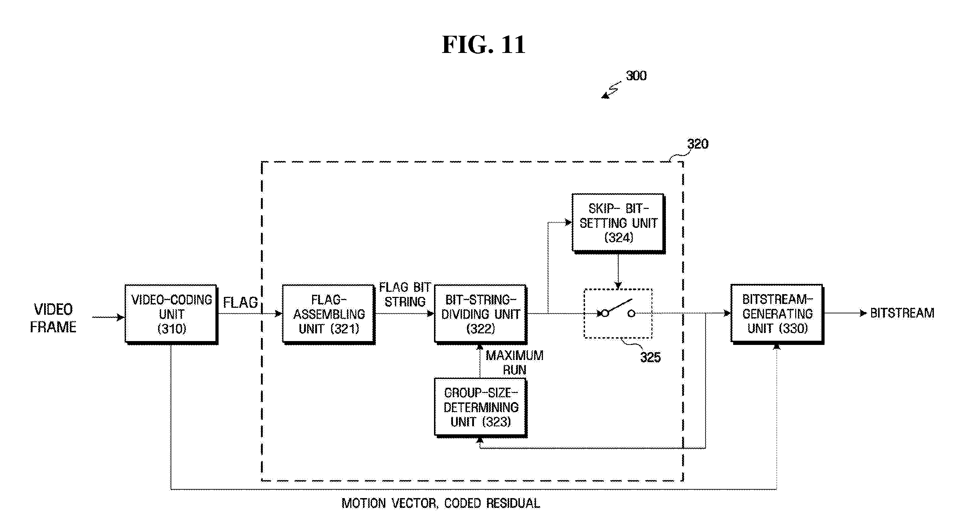

FIG. 11 is a block diagram illustrating configuration of a video-encoding apparatus 300 and a flag-encoding apparatus 320 according to a second embodiment of the present invention.

The video-encoding apparatus 300 may include a video-coding unit 310, a flag-encoding apparatus 320, and a bitstream generating unit 330.

First, the video-coding unit 310 generates a motion vector and the coded residual from the input video frame as the video-coding unit 110 does.

The flag-encoding apparatus 320 encodes the flags used to code the video frame composed of a plurality of blocks, including a flag-assembling unit 321, a bit-array-dividing unit 322, a group-size-determining unit 323, a skip-bit-setting unit 324, and a switching unit 325.

The flag-assembling unit 321 generates a flag bit string after collecting the flag value allotted for each block, based on the spatial correlation of the blocks.

The bit-array-dividing unit 322 divides the flag bit string into a predetermined group size. The group size may be already predetermined between a video-encoding apparatus and a video decoding apparatus, or it may be transmitted to the video-decoding apparatus after variably determining the optimal group size from the video-encoding apparatus. In the latter case, the group-size-determining unit 323 determines the group size as the value making the bitstream size the minimum.

The skip-bit-setting unit 324 sets a skip bit that signifies whether every value of the divided-flag-bit string is 0.

The switching unit 325 passes or skips the divided flag bit string according to the set skip bit. A control signal on the switching operation of the switching unit 325 is a skip bit provided by the skip-bit-setting unit 324. More particularly, if the skip bit is 1 bit (for example, 1), the switching unit 325 is controlled to be open and the divided bit string is skipped. If the skip bit is 2 bit (for example, 2), the switching unit 325 is controlled to be closed, and the divided bit string is passed and then recorded in a bitstream.

As mentioned above in Table 4, it is desirable to record the group size in a slice header of the bitstream. As mentioned in Tables 5 and 6, it is desirable to record the skip bit in a header of the first block among the blocks having a size as large as the bitstream. However, it is also possible to collect the skip bit and record it in a slice header.

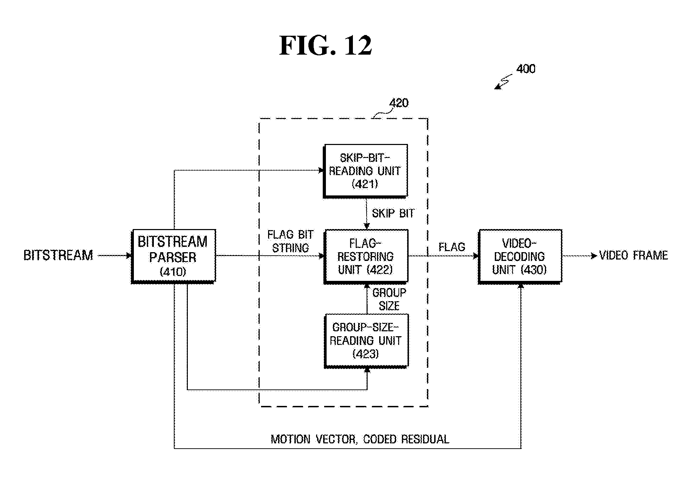

FIG. 12 is a block diagram illustrating a configuration of a video-decoding apparatus 400 and a flag-decoding apparatus 420 according to a second embodiment of the present invention.

The video-decoding apparatus 400 may include a bitstream parser 410, a flag-decoding apparatus 420, and a video-decoding unit 430.

The bitstream parser 410 reads out a motion vector, coded residual, flag bit string from the input bitstream.

The flag-decoding apparatus 420 decodes a flag used to code a video frame composed of a plurality of blocks, and includes a skip-bit-reading unit 421, a flag-restoring unit 422, and a group-size-reading unit 423.

First, the skip-bit-reading unit 421 reads out a skip bit from the input bitstream, and the group-size-reading unit 423 reads out group size from the bitstream. The group size is recorded in a slice header of the bitstream, and the skip bit is recorded in a header of the first block among the blocks having a size as large as the bitstream group, or in the slice header.

The flag-restoring unit 422 restores each flag with respect to the blocks from the bits having a size as large as the group size among the flag bit strings included in the bitstream. More particularly, the flag-restoring unit 422 sets the bits as large as the group size into the restored flag when the skip bit is a first bit (for example, 1). Since 0's consecutive as many as the flag bit strings with the size as large as the group size are skipped in the flag-encoding apparatus 320 when the group bit is a second bit (for example, 0), the 0's of the group size are set to the restored flag.

Set by the flag-restoring unit 422, the flag restored for each block is provided to the video-decoding unit 430. The video-decoding unit 230 reconstructs the restored flag, and a video frame by using the motion vector and the coded residual provided from the bitstream parser 410. The video frame restoring process cannot be achieved through the generally known method in the conventional art, performed reversely against the video frame coding process of FIG. 11.

Individual flags are set or restored for each macroblock in the above embodiments, but which is just a single example. It can be fully understood by those of ordinary skill in the art that the flags are set into a slice unit larger than a macroblock, or a sub-block (8x8 or 4x4 block) unit smaller than a macroblock.

Hereinafter, each component used in FIGS. 2 to 6 can be implemented by software components, such as a task, class, sub-routine, process, object, execution thread, program, performed on a predetermined region of a memory, or by hardware components, such as a Field Programmable Gate Array (FPGA) or an Application Specific Integrated Circuit (ASIC), or by combination of software and hardware components. The components may be included in a computer-readable storage medium, or distributed in a plurality of computers.

As mentioned above, according to the present invention, the coding efficiency of a variety of flags used in a scalable video codec can be improved.

Especially, the efficiency can be improved further in coding the flags having a spatially close relation or a close relation among the layers.

The preferred embodiments of the present invention have been described for illustrative purposes, and those skilled in the art will appreciate that various modifications, additions and substitutions are possible without departing from the scope and spirit of the invention as disclosed in the accompanying claims. Therefore, the scope of the present invention should be defined by the appended claims and their legal equivalents.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. An apparatus for encoding a flag used to code a video frame composed of a plurality of blocks, the apparatus comprising:

   a flag-assembling unit (121) which collects flag values allotted for each block and produces a flag bit string, based on the spatial correlation of the blocks;
   a maximum-run-determining unit (122) which determines a maximum run of the flag bit string; and
   a converting unit (125) which converts the bits included in the flag bit string into a codeword with a size no more than the maximum run by using a predetermined codeword table.

2. The apparatus for encoding a flag of claim 1, wherein the maximum run is set to a value making the size of a final bitstream a minimum.

3. The apparatus for encoding a flag of claim 1, wherein the number of 0's corresponding to the number of maximum runs is mapped to a codeword having the shortest length.

4. The apparatus for encoding a flag of claim 3, wherein the codeword with the shortest length is 0.

5. The apparatus for encoding a flag of claim 4, wherein the maximum run is 8.

6. The apparatus for encoding a flag of claim 1, wherein the blocks are a macroblock, 8x8 block, or 4x4 block.

7. The apparatus for encoding a flag of claim 1, wherein the flag is a coded block pattern (Cbp) or a residual prediction flag.

8. The apparatus for encoding a flag of claim 7, wherein if the flag is a residual prediction flag, the apparatus further comprises a calculating unit (126) which obtains an exclusive logical sum of the flag value and the value indicating if the residual energy of the block of lower layer corresponding to the block including the flag value exists before the flag bit string is generated.

9. The apparatus for encoding a flag of claim 8, wherein the value indicating whether the residual energy exists is the Cbp of the lower layer.

10. An apparatus for decoding a flag used to code a video frame composed of a plurality of blocks, the apparatus comprising:

   a inverse-converting unit (222) which reconstructs a flag bit string from a codeword included in the input bitstream with reference to a predetermined codeword table (221); and
   a flag-restoring unit (223) which reads out individual bits included in the reconstructed flag bit string and restores the flags with respect to the plurality of blocks.

11. The apparatus for decoding a flag of claim 10, wherein blocks corresponding to the bits adjacent to each other among the read bits have a spatially adjacent position in the video frame.

12. The apparatus for decoding a flag of claim 10, wherein the codeword table maps the codeword to the symbol within the maximum run with a predetermined size.

13. The apparatus for decoding a flag of claim 12, wherein the codeword table maps the codeword having a shortest length among the codewords into a number of 0's corresponding to the maximum run.

14. The apparatus for decoding a flag of claim 13, wherein the codeword with the shortest length is 0.

15. The apparatus for decoding a flag of claim 13, wherein the maximum run is 8.

16. The apparatus for decoding a flag of claim 10, wherein the flag is a Cbp or residual prediction flag.

17. The apparatus for decoding a flag of claim 16, wherein if the flag is a residual prediction flag, the apparatus further comprises a calculating unit (224) which obtains an exclusive logical sum of the reconstructed flag bit string and the value indicating if the residual energy of the block of lower layer corresponding to the block including the flag bit string exists before the flag bit string is reconstructed.

18. The apparatus for decoding a flag of claim 17, wherein the value indicating if the residual energy exists is the Cbp of the lower layer.

19. An apparatus for encoding a flag used to code a video frame composed of a plurality of blocks, the apparatus comprising:

   a flag-assembling unit (321) which collects flag values allotted for each block and produces a flag bit string, based on spatial correlation of the blocks;
   a bit-array-dividing unit (322) which divides the flag bit string into a predetermined size of a group;
   a skip-bit-setting unit (324) which sets a skip bit indicating whether every value of the divided flag bit strings is 0; and
a switching unit (325) which records or skips the divided flag bit string into a bitstream according to the set skip bit.

20. The apparatus for encoding a flag of claim 19, wherein the blocks are a macroblock, 8x8 block, or 4x4 block.

21. The apparatus for encoding a flag of claim 19, wherein the flag is a coded block pattern (Cbp) or a residual prediction flag.

22. The apparatus for encoding a flag of claim 19, wherein the group size is recorded in a slice header of the bitstream.

23. The apparatus for encoding a flag of claim 19, wherein the skip bit is recorded in a slice header of the bitstream or in a header of the first block among the blocks having the size as large as the group.

24. The apparatus for encoding a flag of claim 19, further comprising a group-size-determining unit (323) which determines the group size as the value with the minimum size.

25. An apparatus for decoding a flag used to code a video frame composed of a plurality of blocks, the apparatus comprising:

a skip-bit-reading unit (421) which reads a skip bit from the input bitstream;
a group-size-reading unit (423) which reads out a group size from the input bitstream; and
a flag-restoring unit (422) which restores the individual flags with respect to the blocks from the bits as large as the group size among flag bit strings included in the bitstream according to the read skip bit.

26. The apparatus for decoding a flag of claim 25, wherein the flag-restoring unit (422) respectively sets the bits as large as the group size into the restored flag when the skip bit is a first bit, and when the skip bit is a second bit, a number of 0's as large as the group size is set as the restored flag.

27. The apparatus for decoding a flag of claim 26, wherein the first bit is 1 and the second bit is 0.

28. The apparatus for decoding a flag of claim 25, wherein the blocks are macroblocks, 8x8 blocks, or 4x4 blocks.

29. The apparatus for decoding a flag of claim 25, wherein the flag is a Cbp or a residual prediction flag.

30. The apparatus for decoding a flag of claim 25, wherein the group size is included in a slice header of the bitstream.

31. The apparatus for decoding a flag of claim 25, wherein the skip bit is recorded in a slice header of the bitstream or in a header of the first block among the blocks having a size as large as the group.

# FIG. 1

FOREMAN QCIF@15 to CIF@30

# FIG. 2

FOREMAN QCIF@15 to CIF@30

# FIG. 3

# FIG. 4

# FIG. 5

| A_flag$_1$ | A_flag$_2$ | A_flag$_3$ | · · · · | A_flag$_n$ | → ENTROPY ENCODING |

| B_flag$_1$ | B_flag$_2$ | B_flag$_3$ | · · · · | B_flag$_n$ | → ENTROPY ENCODING |

.
.
.

# FIG. 6

FOREMAN QCIF@15 to CIF@30

# FIG. 7

50

51                                              52

| LOWER LAYER BITSTREAM | CURRENT LAYER BITSTREAM |

. . . . .                                              . . . . .

53      54      55                                      56

| Slice | Slice | Slice | . . . . . | Slice |

60                    70

| slice header | slice data |

71      72      73                          74

| MB | MB | MB | . . . . . | MB |

81            82                  83

| MB header | motion vector | coded residual |

# FIG. 8

# FIG. 9

EP 1 871 116 A2

**FIG. 10**

# FIG. 11

300

320

VIDEO FRAME → VIDEO-CODING UNIT (310)

FLAG → FLAG-ASSEMBLING UNIT (321)

FLAG BIT STRING → BIT-STRING-DIVIDING UNIT (322)

SKIP- BIT- SETTING UNIT (324)

325

BITSTREAM-GENERATING UNIT (330) → BITSTREAM

MAXIMUM RUN

GROUP-SIZE-DETERMINING UNIT (323)

MOTION VECTOR, CODED RESIDUAL

EP 1 871 116 A2

# FIG. 12

400

420

SKIP-BIT-
READING UNIT
(421)

SKIP BIT

BITSTREAM → BITSTREAM
PARSER
(410)

FLAG BIT
STRING

FLAG-
RESTORING
UNIT (422)

FLAG

VIDEO-
DECODING
UNIT (430)

→ VIDEO FRAME

GROUP
SIZE

GROUP-SIZE-
READING UNIT
(423)

MOTION VECTOR, CODED RESIDUAL